# EUROPÄISCHE PATENTSCHRIFT

(11) **EP 1 417 268 B1**
(45) Veröffentlichungstag und Bekanntmachung des Hinweises auf die Patenterteilung: **26.06.2013**
(21) Anmeldenummer: 02751173.2
(22) Anmeldetag: 06.08.2002
(51) Int. Cl.: C09D 5/04, C08G 18/28

(54) **RHEOLOGIEHILFSMITTEL, VERFAHREN ZU SEINER HERSTELLUNG UND SEINE VERWENDUNG**
RHEOLOGICAL ADJUNCTS, METHOD FOR PRODUCTION AND USE THEREOF
AUXILIAIRES RHEOLOGIQUES, PROCEDE PERMETTANT DE LES PRODUIRE ET LEUR UTILISATION

(30) Priorität: 09.08.2001 DE 10139262
(43) Veröffentlichungstag der Anmeldung: 12.05.2004
(73) Patentinhaber: BASF Coatings GmbH, 48165 Münster (DE)
(72) Erfinder: RINK, Heinz-Peter, 48153 Münster (DE); JUNG, Werner-Alfons, 59387 Ascheberg (DE); MEISENBURG, Uwe, 47051 Duisburg (DE); BAUMGART, Hubert, 48163 Münster (DE); RÖCKRATH, Ulrike, 48308 Senden (DE)
(74) Vertreter: Leifert & Steffan
(86) Internationale Anmeldenummer: PCT/EP2002/008755
(87) Internationale Veröffentlichungsnummer: WO 2003/014233

(56) Entgegenhaltungen:
- EP-A- 0 192 304
- EP-A- 0 300 388
- DE-A- 1 619 816
- DE-A- 1 805 693
- DE-A- 19 924 170
- US-A- 3 852 347
- US-A- 3 979 202
- US-A- 6 136 762
- SKITA ET AL: "Zur Stereochemie der trisubstituierten Cyclohexane", BERICHTE DER DEUTSCHEN CHEMISCHEN GESELLSCHAFT, VERLAG CHEMIE. WEINHEIM, DE, vol. 56, 1 January 1923 (1923-01-01), pages 2234-2244, XP009149073,

## Beschreibung

Die vorliegende Erfindung betrifft ein neues Rheologiehilfsmittel. Außerdem betrifft die vorliegende Erfindung ein neues Verfahren zur Herstellung von Rheologiehilfsmitteln. Des weiteren betrifft die vorliegende Erfindung die Verwendung des neuen Rheologiehilfsmittels für die Herstellung von Beschichtungsstoffen, Klebstoffen und Dichtungsmassen.

Rheologiehilfsmittel zur Einstellung eines strukturviskosen Verhaltens (vgl. Römpp Lexikon Lacke und Druckfarben, Georg Thieme Verlag, Stuttgart, New York, 1998, »Strukturviskosität«, Seite 546) und sie enthaltende strukturviskose Beschichtungsstoffe sind seit langem bekannt. Mit dem Einsatz von Rheologiehilfsmitteln in Beschichtungsstoffen soll unter anderem die Applikation von vergleichsweise dicken Lackschichten ermöglicht werden, ohne daß es zu störender "Läuferbildung" kommt.

Die bekannten Rheologiehilfsmittel enthalten Harnstoffderivate, die vorzugsweise durch Umsetzung von Polyisocyanaten mit Monoaminen oder von Monoisocyanaten mit Polyaminen herstellbar sind. Geeignete Rheologiehilfsmittel und Hamstoffderivate sind beispielsweise aus den Literaturstellen EP 0 192 304 A1, DE 18 05 693 A1, WO 94/22968, DE 27 51 761 C2, WO 97/12945 und "farbe + lack", 11/1992, Seiten 829 ff., WO 00/31194, WO 00/37520, DE 199 24 172 A1, DE 199 24 171 A1 oder DE 199 24 170 A1 bekannt. Im allgemeinen werden Methoxypropylamin, Benzylamin und/oder n-Hexylamin bevorzugt verwendet Es werden keine sterisch gehinderten Monoamine eingesetzt.

Aus der deutschen Patentschrift DE 23 59 923 ist die Herstellung von Rheologiehilfsmitteln aus Polyisocyanaten und den sterisch gehinderten Diaminen 1,3,5-Triisopropylbenzol-2,4-diamin und 1,3-Diisopropylbenzol-2,4-diamin bekannt. Es können noch primäre Monoamine mit aliphatischer, cycloaliphatischer und heterocyclischer Struktur mit 1 bis 25 oder auch noch mehr Kohlenstoffatomen mitverwendet werden. Auch sekundäre Monoamine mit aliphatischer oder cycloaliphatischer Struktur, wie Dibutylamin oder Dicyclohexylamin kommen in Betracht. Sterisch gehinderte Monoamine werden jedoch nicht verwendet.

Hier und im folgenden ist unter »sterischer Hinderung« die räumliche Abschirmung einer primären oder sekundären Aminogruppe durch mindestens einen voluminösen organischen Rest zu verstehen, die die Zugänglichkeit der Aminogruppe für Reakbonspartner herabsetzt.

Die bekannten Rheologiehilfsmittel weisen bereits ein ausgeprägtes strukturviskoses Verhalten auf, das indes weiter verbessert werden muß, um den gestiegenen Ansprüchen des Marktes zu genügen. Die Beschichtungsstoffe, die diese bekannten Rheologiehilfsmittel enthalten, können in vergleichsweise hohen Schichtdicken appliziert werden. Ihre Neigung zur Bildung von Läufern nach der Applikation und während der Härtung ist gegenüber Beschichtungsstoffen, die keine Rheologiehilfsmittel enthalten, deutlich verringert. Anders gesagt, ist ihre Standsicherheit höher. Auch diese gilt es weiterzuentwickeln, um den wachsenden Ansprüchen des Marktes zu genügen. Insbesondere soll das strukturviskose Verhalten von Beschichtungsstoffen mit geringeren Mengen an Rheologiehilfsmitteln eingestellt werden können, um ihre bekannten nachteiligen Effekte, wie etwa die Bildung von Trübungen in den Beschichtungsstoffen und den hieraus hergestellten Beschichtungen zu vermeiden.

Aufgabe der vorliegenden Erfindung ist es, ein neues Rheologiehilfsmittel auf der Basis von Hamstoffderivaten zu finden, das ein ausgeprägteres strukturviskoses Verhalten als die bekannten Rheologiehilfsmittel aufweist und die Einstellung eines vorteilhaften strukturviskosen Verhaltens mit geringeren Mengen an Rheologiehilfsmitteln ermöglicht, so daß keine nachteiligen Effekte mehr hervorgerufen werden.

Demgemäß wurde das neue Rheologiehilfsmittel gefunden, enthaltend mindestens ein Harnstoffderivat, herstellbar, indem man
(A) mindestens ein Polyisocyanat mit
(B) mindestens einem Reaktionspartner, ausgewählt aus der Gruppe, bestehend aus sterisch gehinderten, primären und sekundären Monoaminen der allgemeinen Formel (BII) 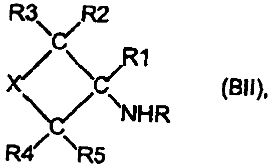 worin die Variablen die folgende Bedeutung haben:
   - R: Wasserstoffatom, Alkyl mit 1 bis 10 Kohlenstoffatomen, Cycloalkyl mit 4 bis 8 Kohlenstoffatomen, Aryl mit 6 bis 12 Kohlenstoffatomen, Heteroaryl mit zwei bis 12 Kohlenstoffatomen;
   - R1, R3 und R4: unabhängig voneinander wie R oder inerter Substituent;
   - R2 und R5: unabhängig voneinander wie R, ausgenommen Wasserstoffatom, es sei denn einer der Reste R2 oder R5 steht für einen Rest R mit mindestens zwei Kohlenstoffatomen;
   - X: Methylen-, Dimethylen- oder Trimethylenrest,
   umsetzt.

Im folgenden wird das neue Rheologiehilfsmittel, enthaltend mindestens ein Harnstoffderivat, als "erfindungsgemäßes Rheologiehilfsmittel" bezeichent.

Außerdem wurde das neue Verfahren zur Herstellung von Rheologiehilfsmitteln, enthaltend mindestens ein Harnstoffderivat, gefunden, dadurch gekennzeichet, daß man
(A) mindestens ein Polyisocyanat mit
(B) mindestens einem Reaktionspartner, ausgewählt aus der Gruppe, bestehend aus sterisch gehinderten, primären und sekundären Monoaminen der allgemeinen Formel (BII) 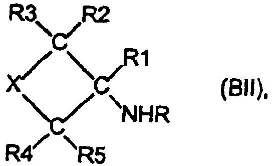 worin die Variablen die folgende Bedeutung haben:
   - R: Wasserstoffatom, Alkyl mit 1 bis 10 Kohlenstoffatomen, Cycloalkyl mit 4 bis 8 Kohlenstoffatomen, Aryl mit 6 bis 12 Kohlenstoffatomen, Heteroaryl mit zwei bis 12 Kohlenstoffatomen;
   - R1, R3 und R4: unabhängig voneinander wie R oder inerter Substituent;
   - R2 und R5: unabhängig voneinander wie R, ausgenommen Wasserstoffatom, es sei denn einer der Reste R2 oder R5 steht für einen Rest R mit mindestens zwei Kohlenstoffatomen;
   - X: Methylen-, Dimethylen- oder Trimethylenrest,
in einem organischen Medium umsetzt.

Im folgenden wird das neue Verfahren zur Herstellung von Rheologiehilfsmitteln, enthaltend mindestens ein Harnstoffderivat, als "erfindungsgemäßes Verfahren" bezeichnet.

Außerdem wurde die Verwendung der erfindungsgemäßen Rheologiehilfsmittel zur Herstellung neuer Beschichtungsstoffe, Klebstoffe und Dichtungsmassen gefunden.

Weitere Erfindungsgegenstände gehen aus der nachfolgenden Beschreibung hervor.

Im Hinblick auf den Stand der Technik war es überraschend und für den Fachmann nicht vorhersehbar, daß die Aufgabe, die der vorliegenden Erfindung zugrunde lag, mit Hilfe der erfindungsgemäßen Rheologiehilfsmittel und des erfindungsgemäßen Verfahrens gelöst werden konnte. Vor allem überraschte, daß die neuen Rheologiehilfsmittel mit Hilfe des erfindungsgemäßen Verfahrens in einfacher Weise und zuverlässig reproduzierbar hergestellt werden konnten.

Insbesondere überraschte, daß die erfindungsgemäßen Rheologiehilfsmittel eine besonders ausgeprägte Strukturviskosität aufwiesen, die diejenige von bekannten Rheologiehilfsmitteln übertraf, und außerordentlich breit anwendbar waren. Sie lieferten Beschichtungsstoffe, Klebstoffe und Dichtungsmassen, insbesondere aber Beschichtungsstoffe, mit einer besonders hohen Lager-, Transport- und Ringleitungsstabilität, die sich einfach applizieren ließen und auch an vertikalen Flächen keine oder nur eine sehr geringe Läufemeigung aufwiesen. Die hieraus hergestellten Beschichtungen wiesen einen hervorragenden Verlauf und keine Oberflächenstrukturen wie Orangenschalenhaut, Krater oder Nadelstiche auf. Die Beschichtungen waren hoch brillant

Im Hinblick darauf, daß die Hamstoffderivate mit Hilfe von Monoaminen hergestellt wurden, deren reaktive Zentren sterisch abgeschirmt und daher reaktionsträge waren als nicht sterisch gehinderte Monoamine, sind diese Ergebnisse um so mehr überraschend. Denn eher war zu erwarten gewesen, daß diese Erschwerung der Reaktion der Aminogruppen mit den Isocyanatgruppen, die Bildung von Produkten mit weniger guten Eigenschaften bewirkt.

Das erfindungsgemäße Rheologiehilfsmittel enthält mindestens ein Hamstoffderivat.

Der Gehalt des erfindungsgemäßen Rheologiehilfsmittels an den Hamstoffderivaten kann breit variieren und richtet sich insbesondere nach dem rheologischen Verhalten, das die erfindungsgemäßen Beschichtungsstoffe, Klebstoffe und Dichtungsmassen haben sollen. Vorzugsweise enthält das erfindungsgemäße Rheologiehilfsmittel die Hamstoffderivate in einer Menge von, bezogen auf das Rheologiehilfsmittel, 0,1 bis 10, bevorzugt 0,2 bis 9, besonders bevorzugt 0,3 bis 8, ganz besonders bevorzugt 0,4 bis 7 und insbesondere 0,5 bis 6 Gew.-%.

Zur Herstellung der erfindungsgemäß zu verwendenden Hamstoffderivate wird mindestens eine Verbindung (A) eingesetzt. Die Verbindung (A) wird aus Polyisocyanaten ausgewählt. Vorzugsweise sind die Polyisocyanate (A) Diisocyanate.

Beispiele geeigneter Diisocyanate (A) sind Tetramethylen-1,4-diisocyanat, Hexamethylen-1,6-diisocyanat 2,2,4-Trimethylhexamethylen-1,6-diisocyanat, omega,omega'-Dipropyl-äther-diisocyanat, Cyclohexyl-1,4-diisocyanat, Cyclohexyl-1,3-diisocyanat, Cyclohexyl-1,2-diisocyanat, Dicyclohexylmethan-4,4'-diisocyanat, 1,5-Dimethyl-2,4-di(isocyanatomethyl)-benzol, 1,5-Di-methyl-2,4-di(isocyanatoethyl)-benzol, 1,3,5-Trimethyl-2,4-di(isocyanatomethyl)-benzol, 1,3,5-Triethyl-2,4-di(isocyanatomethyl)-benzol, Isophorondiisocyanat, Dicyclohexyldimethylmethan-4,4'-diisocyanat, 2,4-Toluylendiisocyanat, 2,6-Toluylendiisocyanat Diphenylmethan-4,4'-diisocyanat.

Beispiele geeigneter Polyisocyanate (A) sind Triisocyanate wie Nonantriisocyanat (NTI) sowie Polyisocyanate (A) auf der Basis der vorstehend beschriebenen Diisocyanate und Triisocyanate (A), insbesondere Oligomere, die Isocyanurat-, Biuret-, Allophanat-, Iminooxadiazindion-, Urethan-, Carbodiimid-, Harnstoff- und/oder Uretdiongruppen enthalten. Beispiele geeigneter Polyisocyanaten (A) dieser Art sowie Verfahren zu ihrer Herstellung sind beispielsweise aus den Patentschriften und Patentanmeldungen CA 2,163,591 A 1, US 4,419,513 A, US 4,454,317 A, EP 0 646 608 A 1, US 4,801,675 A, EP 0 183 976 A 1, DE 40 15 155 A 1, EP 0 303 150 A 1, EP 0 496 208 A 1, EP 0 524 500 A 1, EP 0 566 037 A 1, US 5,258,482 A, US 5,290,902 A, EP 0 649 806 A 1, DE 42 29183 A 1 oder EP 0 531 820 A 1 bekannt.

Vorzugsweise werden die Oligomeren (A) von Hexamethylendiisocyanat und von Isophorondiisocyanat verwendet.

Die vorstehend beschriebenen Oligomere (A) haben vorteilhafterweise eine NCO-Funktionalität von 2,0 - 5,0, vorzugsweise von 2,2 - 4,0, insbesondere von 2,5 - 3,8.

Außerdem kommen die hochviskosen Polyisocyanate (A), wie sie in der deutschen Patentanmeldung DE 198 28 935 A 1 beschrieben werden, sowie die aus der deutschen Patentanmeldung DE 199 24 170 A 1, Spalte 2, Zeile 6 bis 34, Spalte 4, Zeile 16, bis Spalte 6, Zeile 62, bekannten Polyisocyanate (A) in Betracht. Ergänzend wird noch auf die internationalen Patentanmeldungen WO 00/31194, Seite 11, Zeile 30, bis Seite 12, Zeile 26, und WO 00/37520. Seite 5, Zeile 4, bis Seite 6, Zeile 27, verwiesen.

Zur Herstellung der Hamstoffderivate werden die vorstehend beschriebenen Verbindungen (A) mit mindestens einem Reaktionspartner (B), ausgewählt aus der Gruppe, bestehend aus sterisch gehinderten primären und sekundären Monoaminen, umgesetzt.

Beispiele geeigneter aliphatischer sterisch blockierender Reste sind Alkylreste mit 1 bis 10 Kohlenstoffatomen, wie Methyl, Methyl, Propyl, Isopropyl, n-Butyl, Isobutyl, tert.-Butyl, Pentyl, Amyl, Neopentyl, Hexyl, Heptyl, Octyl, Nonyl und Decyl, insbesondere Methyl.

Beispiele geeigneter cycloaliphatischer sterisch blockierender Reste sind Cycloalkylreste mit 4 bis 8 Kohlenstoffatomen, wie Cyclobutyl, Cyclopentyl, Cyclohexyl, Cycloheptyl und Cyclooctyl, insbesondere Cyclohexyl.

Beispiele geeigneter aromatischer sterisch blockierender Reste sind Phenyl, Diphenyl und Naphthyl, insbesondere Phenyl.

Beispiele geeigneter heteroaromatischer sterisch blockierender Reste (Heteroaryl) sind Pyridinyl, Chinolinyl, Isochinolinyl, Pyridazinyl, Pyrimidinyl, Pyrazinyl oder Triazinyl, insbesondere Pyridinyl und Triazinyl.

Wird eine Aminogruppe nur durch einen sterisch blockierenden oder hindernden Rest abgeschirmt, weist dieser mindestens zwei, vorzugsweise mindestens drei Kohlenstoffatome auf. Handelt es sich dabei um aliphatische Reste, sind diese vorzugsweise verzweigt. Beispiele geeigneter Reste dieser Art sind Isopropyl, tert.-Butyl oder Neopentyl.

Die primären und sekundären sterisch gehinderten Monoamine (B) können insbesondere in ihren Grundsystemen und/oder in ihren sterisch blockierenden Resten Substituenten tragen, die von den vorstehend beschriebenen einbindigen organischen Resten verschieden sind. Durch den Einbau von Substituenten können die Eigenschaften der Harnstoffderivate und damit der erfindungsgemäßen Rheologiehilfsmittel gezielt variiert werden.

Vorzugsweise sind die Substituenten inert. Im Rahmen der vorliegenden Erfindung bedeutet »inert«, daß die betreffenden Substituenten unter den Bedingungen der Umsetzung von (A) mit (B) keine oder im Vergleich zu der Reaktion der Aminogruppen mit den Isocyanatgruppen nur sehr langsame Reaktionen eingehen und/oder initiieren.

Vorzugsweise werden die Substituenten aus der Gruppe, bestehend aus Fluor-, Chlor- und Bromatomen sowie Hydroxyl-, Nitril-, Nitro-, Ether- und Carbonsäure-, Sulfonsäure- und Phosphonsäureester, ausgewählt.

Besonders bevorzugt tragen die Harnstoffderivate keine Substituenten.

Die vorstehend beschriebenen Monoamine (B) werden aus der Gruppe, bestehend aus den Monoaminen der allgemeinen Formel (BII) ausgewählt: 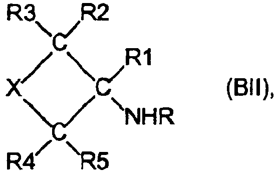 worin die Variablen die folgende Bedeutung haben:
- R: Wasserstoffatom, Alkyl mit 1 bis 10 Kohlenstoffatomen, Cycloalkyl mit 4 bis 8 Kohlenstoffatomen, Aryl mit 6 bis 12 Kohlenstoffatomen, Heteroaryl mit 2 bis 12 Kohlenstoffatomen, insbesondere die vorstehend beschriebenen aliphatischen, cycloaliphatischen, aromatischen und heteroaromatischen Reste;
- R1, R3 und R4: wie R oder inerter Substituent, bevorzugt die vorstehend beschriebenen inerten Substituenten, insbesondere Fluor-, Chlor- und Bromatome sowie Nitril-, Nitro-, Ether- und Carbonsäure-, Sulfonsäure - und Phosphonsäureester;
- R2 und R5: unabhängig voneinander wie R, ausgenommen Wasserstoffatom, es sei denn R2 oder R5 steht für einen Rest R mit mindestens zwei, bevorzugt mindestens drei Kohlenstoffatomen;
insbesondere R2 und R5 = Alkyl, vorzugsweise Methyl, und R3 und R4 = Wasserstoffatome;
Methylen, Dimethylen oder Trimethylen, insbesondere Trimethylen;

Beispiele geeigneter Monoamine (B) der allgemeinen Formel (BII) sind 1-Amino-2,2,6,6-tetramethylcyclohexan, 2,6-Dimethylcyclohexylamin, oder 2-tert-Butylcyclohexylamin, insbesondere 2,6-Dimethylcyclohexylamin.

Vorzugsweise werden die Ausgangsprodukte (A) und (B) in solchen Mengen miteinander umgesetzt, daß das Äquivalentverhältnis von Isocyanatgruppen in (A) zu den isocyanatreaktiven Gruppen in (B) bei 2 : 1 bis 1 : 2, bevorzugt 1,8 : 1 bis 1 : 1,8, besonders bevorzugt 1,6 : 1 bis 1 : 1,6, ganz besonders bevorzugt 1,4 : 1 bis 1 : 1,4 und insbesondere 1,2 : 1 bis 1 : 1,2 liegt.

Die vorstehend beschriebenen Ausgangsprodukte (A) einerseits und (B) andererseits können für die Umsetzung beliebig kombiniert werden. Besonders vorteilhafte Harnstoffderivate und erfindungsgemäße Rheologiehilfsmittel resultieren, wenn (A) mindestens ein Diisocyanat ist und (B) mindestens ein Monoamin ist.

Neben den vorstehend beschriebenen erfindungsgemäß zu verwendenden sterisch gehinderten Monoaminen und Polyaminen (B) können auch noch Wasser sowie übliche und bekannte Monoamine und Polyamine in untergeordneten Mengen für die Reaktion mit den Mono- und Polyisocyanaten (A) eingesetzt werden. »Untergeordnete Mengen« bedeutet, daß nur solche Mengen an Wasser und/oder üblichen und bekannten Monoaminen und Polyaminen verwendet werden, daß das Eigenschaftsprofil der betreffenden erfindungsgemäß zu verwendenden Harnstoffderivate in erster Linie von den erfindungsgemäß zu verwendenden sterisch gehinderten Monoaminen (B) bestimmt wird.

Beispiele geeigneter üblicher und bekannter Monoamine sind aus den deutschen Patentanmeldungen DE 199 24 172 A 1, Seite 3, Zeilen 3 bis 10, oder DE 199 24 171 A 1, Seite 3, Zeilen 35 bis 42, oder den internationalen Patentanmeldungen WO 00/31194, Seite 11, Zeilen 14 bis 29, und WO 00/37520, Seite 3, Zeile 15, bis Seite 4, Zeile 5, bekannt. Besonders bevorzugt werden Methoxypropylamin, Benzylamin und/oder n-Hexylamin verwendet.

Die üblichen und bekannten Polyamine können aus der Gruppe der aliphatischen, cycloaliphatischen, aromatischen, aliphatisch-aromatischen, cycloaliphatisch-aromatischen und aliphatisch-cycloaliphatischen Polyamine ausgewählt werden. Vorzugsweise enthalten die Polyamine primäre oder primäre und sekundäre Aminogruppen. Die vorstehend aufgeführten Nomenklaturregeln sind hier sinngemäß anzuwenden.

Vorzugsweise können die üblichen und bekannten Polyamine aus der Gruppe, bestehend aus aliphatischen und cycloaliphafischen Polyaminen, ausgewählt werden. Beispiele geeigneter üblicher und bekannter Polyamine sind aus der internationalen Patentanmeldung WO 00/37520, Seite 4, Zeilen 6 bis 19, oder aus der Deutschen Patentschrift DE 23 59 923, Spalte 5, Zeile 55, bis Spalte 6, Zeile 27, und Spalte 7, Zeilen 35 bis 61, bekannt.

Vorzugsweise erfolgt die Umsetzung von (A) mit (B) in einem organischen Medium, wobei Mengen an (A) und (B) angewandt werden, daß der vorstehend beschriebene Gehalt an Hamstoffderivaten in den erfindungsgemäßen Rheologiehilfsmittein resultiert.

Das organische Medium kann mindestens ein organisches Lösemittel enthalten. Vorzugsweise werden die organischen Lösemittel aus den in D. Stoye und W. Freitag (Editors), »Paints, Coatings and Solvents«; Second, Completely Revised Edition, Wiley-VCH, Weinheim, New York, 1998, »14.9. Solvent Groups«, Seiten 327 bis 373, beschriebenen Lösemitteln ausgewählt.

Darüber hinaus kann das organische Medium mindestens eine Verbindung, ausgewählt aus der Gruppe, bestehend aus thermisch, mit aktinischer Strahlung und thermisch und mit mit aktinischer Strahlung (Dual-Cure) härtbaren, niedermolekularen, oligomeren und polymeren Verbindungen, enthalten.

Vorzugsweise werden die niedermolekularen Verbindungen aus der Gruppe, bestehend aus thermisch und mit aktinischer Strahlung härtbaren Reaktivverdünnem und thermisch oder thermisch und mit aktinischer Strahlung härtbaren Vernetzungsmitteln, und die oligomeren und polymeren Verbindungen aus der Gruppe, bestehend aus statistisch, alternierend und blockartig aufgebauten, linearen, verzweigten und kammartig aufgebauten, thermisch, mit aktinischer Strahlung und thermisch und mit aktinischer Strahlung (Dual-Cure) härtbaren (Co)Polymerisaten von olefinisch ungesättigten Monomeren, sowie Polyadditionsharzen und Polykondensationsharzen, ausgewählt.

Wesentlich für die Auswahl ist, daß die vorstehend beschriebenen organischen Lösemittel und Verbindungen nicht die Umsetzung zwischen den Ausgangsprodukten (A) und (B) stören, indem sie etwa rascher mit den Polyisocyanaten (A) reagieren als die Monomeren (B).

Beispiele geeigneter thermisch härtbarer Reaktivverdünner werden in den deutschen Patentanmeldungen DE 198 09 643 A 1, DE 198 40 605 A 1 oder DE 198 05 421 A 1 und Beispiele geeigneter mit aktinischer Strahlung härtbarer Reaktivverdünner in Römpp Lexikon Lacke und Druckfarben, Stuttgart, New York, 1998, Seiten 491 und 492, beschrieben.

Hier und im folgenden ist unter aktinischer Strahlung elektromagnetische Strahlung, wie nahes Infrarot (NIR), sichtbares Licht, UV-Strahlung und Röntgenstrahlung, insbesondere UV-Strahlung, und Korpuskularstrahlung, wie Elektronenstrahlung, zu verstehen.

Beispiele geeigneter thermisch oder thermisch und mit aktinischer Strahlung härtbarer Vernetzungsmittel sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A oder EP 0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden; Carboxylgruppen enthaltende Verbindungen oder Harze, wie sie beispielsweise in der Patentschrift DE 196 52 813 A 1 beschrieben werden; Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A oder US 3,781,379 A beschrieben werden; überschüssige Polyisocaynate (A), wie sie vorstehend beschrieben werden; vollständig blockierte Polyisocyanate (A); vollständig blockierte Isocyanato(meth)acrylate gemäß der europäischen Patentanmeldung EP 0 928 800 A 1, wie sie in der nicht vorveröffentlichten deutschen Patentanmeldung DE 100 41 635.7 beschrieben werden; und/oder Tris(alkoxycarbonylamino)triazine, wie sie aus den Patentschriften US 4,939,213 A, US 5,084,541 A, US 5,288,865 A oder EP 0 604 922 A bekannt sind.

Beispiele geeigneter (Co)Polymerisate, Polyadditionsharze und Polykondensationsharze sind beispielsweise aus der deutschen Patentanmeldung DE 199 24 172 A 1, Seite 3, Zeile 33, bis Seite 5, Zeile 21, der deutschen Patentanmeldung DE 199 24 171 A 1, Seite 5, Zeile 48, bis Seite 7, Zeile 37, oder der deutschen Patentanmeldung DE 199 08 013 A 1, Spalte 5, Zeile 44, bis Spalte 8, Zeile 65 und Spalte 9, Zeilen 25 bis 67, bekannt.

Die Hamstoffderivate können in der Gegenwart mindestens eines grenzflächenaktiven Stoffs hergestellt werden.

Grenzflächenaktive Stoffe sind Verbindungen, die - in einer Flüssigkeit gelöst oder dispergiert - an einer Grenzfläche bevorzugt absorbiert werden und dadurch die Grenzflächenspannung oder im Falle von flüssigen Systemen die Oberflächenspannung herabsetzen. Die Moleküle der grenzflächenaktiven Stoffe besitzen wenigstens eine Gruppe, die eine Affinität zu Oberflächen mit ausgesprochener Polarität hat, sowie einen Rest, der wenige Affinität zu Wasser zeigt (vgl. Römpp Lexikon Lacke und Druckfarben, Georg Thieme Verlag, Stuttgart, New York, 1998, »Grenzflächenaktive Stoffe«, Seite 271).

Vorzugsweise werden die grenzflächenaktiven Stoffe aus der Gruppe, bestehend aus ionischen und nichtionischen, niedermolekularen und oligomeren und hochmolekularen Tensiden ausgewählt. Beispiele geeigneter Tenside dieser Art werden beispielsweise in Römpp Lexikon Lacke und Druckfarben, Georg Thieme Verlag, Stuttgärt, New York, 1998, »Tenside«, Seite 557, und »Niotenside«, Seite 410, beschrieben.

Bevorzugt werden Netzmittel i. S. der Definition von Römpp Lexikon Lacke und Druckfarben, Georg Thieme Verlag, Stuttgart, New York, 1998 »Netzmittel (Benetzungsmittel)«, Seite 409, verwendet.

Geeignete Netzmittel werden in Johan Bieleman, »lackadditive«, Wiley-VCH, Weinheim, New York, 1998, »4 Grenzflächenaktive Verbindungen«, Seite 69 bis 100, insbesondere »4.1.4 Chemische Zusammensetzung der Netz- und Dispergiermittel«, Seiten 87 bis 92, und »4.1.8 Handelsprodukte«, Seite 100, oder in der deutschen Patentanmeldung DE 199 24 171 A 1, Seite 2, Zeile 63, bis Seite 3, Zeile 24, beschrieben.

Gut geeignete Netzmittel sind beispielsweise die Handelsprodukte
- Texaphor ® 963 der Firma Cognis (niedermolekulares Elektroneutralsalz eine Polycarbonsäure mit Aminderivaten, 50prozentig in höheren Aromaten),
- Texaphor ® 3112 der Firma Cognis (hochmolekulares Polyurethan, 50prozentig in Xylol / Butylacetat 2:3),
- Disperbyk ® 110 der Firma Byk Chemie (anionisches Copolymerisat mit sauren Gruppen, Säurezahl: 53 mg KOH/g, 50prozentig in Methoxypropylacetat / Alkylbenzol 1:1),
- Disperbyk ® 161 der Firma Byk Chemie (hochmolekulares Polyurethan, Aminzahl: 11 mg KOH/g, 30prozentig in Methoxypropylacetat / Butylacetat 6:1),
- Disperbyk ® 166 der Firma Byk Chemie (hochmolekulares Polyurethan, Aminzahl: 20 mg KOH/g, 30prozentig in Butylacetat /Methoxypropylacetat 4:1),
- Efka ® 4163 der Firma Efka (hochmolekulares Polyurethan, Aminzahl: 11 mg KOH/g, 30prozentig in Methoxypropylacetat /Butylacetat 6:1) und
- Efka ® 4047 der Firma Efka (hochmolekulares Polyurethan, Aminzahl 10 bis 20 mg KOH/g, 35prozentig in Butylacetat/Methoxypropylacetat/sekundär-Butanol).

Vorzugsweise werden die Netzmittel in einer Menge von 0,1 bis 15, bevorzugt 0,2 bis 13, besonders bevorzugt 0,3 bis 12, ganz besonders bevorzugt 0,4 bis 11 und insbesondere 0,5 bis 10 Gew.-%, jeweils bezogen auf die Gesamtmenge an Netzmittel und Ausgangsprodukten (A) und (B), eingesetzt.

Die Umsetzung der Ausgangsprodukte (A) und (B) bietet keine methodischen Besonderheiten, sondern wird beispielsweise, wie in der deutschen Patentanmeldung DE 199 24 171 A 1, Seite 5, Zeilen 35 bis 40, der deutschen Patentanmeldung DE 199 24 172 A 1, Seite 3, Zeilen 22 bis 27, oder der internationalen Patentanmeldung WO 00/31194, Seite 12, Zeile 23, bis Seite 13, Zeile 19, beschrieben, durchgeführt. Die Umsetzung in der Gegenwart von beispielsweise Aminoplastharzen erfolgt, wie in der internationalen Patentanmeldung WO 00/37520, Seite 6, Seite 29, bis Seite 8, Zeile 14, und Seite 9, Zeile 28, bis Seite 10, Zeile 32, beschrieben.

Für die Herstellung der Hamstoffderivate und der erfindungsgemäßen Rheologiehilfsmittel im Tonnenmaßstab ist das aus der deutschen Patentanmeldung DE 199 03 283 A 1 bekannte kontinuierliche Verfahren, bei dem ein In-line-Dissolver als Mischaggregat verwendet wird, von Vorteil. Dabei kann das Gewichtsverhältnis von vorstehend beschriebener Verbindung zu den Hamstoffderivaten 100 : 1, vorzugsweise 90 : 1, bevorzugt 80 : 1, besonders bevorzugt 70 : 1, ganz besonders bevorzugt 60 : 1 und insbesondere 50 : 1 betragen.

Außer den vorstehend beschriebenen erfindungsgemäß zu verwendenden Hamstoffderivaten und den übrigen Bestandteilen können die erfindungsgemäßen Rheologiehilfsmittel noch mindestens eine modifizierte, pyrogene Kieselsäure, wie sie beispielsweise in der deutschen Patentanmeldung DE 199 24 172 A 1, Seite 3, Zeilen 28 bis 32, beschrieben wird, enthalten.

Die erfindungsgemäßen Rheologiehilfsmittel weisen ein besonders ausgeprägtes strukturviskoses Verhalten auf.

Die erfindungsgemäßen Rheologiehilfsmittel sind außerordentlich breit anwendbar und insbesondere hervorragend zur Herstellung von Beschichtungsstoffen, Klebstoffen und Dichtungsmassen geeignet. Die besagten Beschichtungsstoffe, Klebstoffe und Dichtungsmassen können physikalisch, thermisch, mit aktinischer Strahlung und thermisch und mit mit aktinischer Strahlung (Dual-Cure) härtbar sein.

Die oben besckribenen Beschichtungsstoffe, Klebstoffe und Dichtungsmassen können außer dem erfindungsgemäßen Rheologiehilfsmittel beispielsweise die in der deutschen Patentanmeldung DE 199 24 171 A 1, Seite 5, Zeile 47, bis Seite 9, Zeile 32, im Detail beschriebenen Bestandteile enthalten. Die Beschichtungsstoffe, Klebstoffe und Dichtungsmassen können durch das in dieser deutschen Patentanmeldung auf Seite 9, Zeilen 33 bis 54, beschriebene Verfahren hergestellt werden. Beispiele geeigneter Substrate und Beschichtungsverfahren werden ebenfalls in der deutschen Patentanmeldung auf Seite 9, Zeile 55, bis Seite 10, Zeile 23, beschrieben. Beispiele geeigneter Verfahren für die thermische Härtung und die Härtung mit aktinischer Strahlung sind beispielsweise aus der internationalen Patentanmeldung WO 98/40170, Seite 17, Zeile 18, bis Seite 19, Zeile 20, oder der deutschen Patentanmeldung DE 198 18 713 A 1, Spalte 10, Seite 31, bis Spalte 11, Zeile 33, bekannt

Die der erfindungsgemäßen Rheologiehilfsmittel enthaltendun, strukturviskosen Beschichtungsstoffe werden insbesondere als Klarlacke und/oder als farb- und/oder effektgebende Beschichtungsstoffe für die Herstellung von Ktanackierungen sowie ein - und mehrschichtiger, farb- und/oder effektgebender, elektrisch leitfähiger, magnetisch abschirmender und/oder fluoreszierender Beschichtungen verwendet

Die Stabilität der die erfindungsgemaßen Rheologiehilfsmittel enthaltenden strukturviskosen Beschichtungsstoffe, Klebstoffe und Dichtungsmassen unter statischen und dynamischen Bedingungen, insbesondere die Ringleitungsstabilität, sowie das Ablaufverhalten bei der Applikation und der Härtung sind hervorragend.

Demnach sind die die erfindungsgemäßen Rheologiehilfsmittel enthaltenden strukturviskosen Beschichtungsstoffe, Klebstoffe und Dichtungsmassen hervorragend für die Beschichtung, das Verkleben und das Abdichten von Kraftfahrzeugkarosserien, Teilen von Kraftfahrzeugkarosserien, Kraftfahrzeugen im Innen- und Außenbereich, Bauwerken im Innen- und Außenbereich, Türen, Fenstern und Möbeln sowie für das Lackieren, Verkleben und Abdichten im Rahmen der industriellen Lackierung beispielsweise von Kleinteilen, wie Muttern, Schrauben, Felgen oder Radkappen, von Colls, Container, Emballagen, elektrotechnischen Bauteilen, wie Motorwicklungen oder Transformatorwicklungen, und von weißer Ware, wie Haushaltsgeräte, Heizkessel und Radiatoren, geeignet.

Die aus den die erfindungsgemäßen Rheologiehilfsmittel enthaltenden strukturviskosen Beschichtungsstoffen hergestellten Beschichtungen sind hart, kratzfest, witterungsstabil, chemikalienstabil und vor allem von einer außerordentlich hohen Brillanz.

Die aus den die erfindungsgemäßen Rheologiehilfsmittels enthaltenden, strukturviskosen Klebstoffen hergestellten Klebschichten verbinden auf Dauer die unterschiedlichsten hiermit verklebten Substrate. Es tritt auch unter klimatisch extremen Bedingungen und/oder stark schwankenden Temperaturen kein Verlust der Klebkraft ein.

Die aus den dei erfindungsgemäßen Rheologiehilfsmittel enthaltenden strukturviskosen Dichtungsmassen hergestellten Dichtungen dichten die hiermit abgedichteten Substrate auch in der Gegenwart stark aggressiver Chemikalien auf Dauer ab.

Somit sind die mit den dei erfindungsgemäßen Rheologiehilfsmittels enthaltenden Beschichtungen beschichteten, mit den dei erfindungsmaßen Rheologiehilfsmittel enthaltenden Kleschichten verklebten und/oder mit den die erfindungsgemäßen Rheologiehilfsmittel enthaltenden Dichtungen abgedichteten Substrate von einer außerordentlich langen Lebensdauer und einem besonders hohen Gebrauchswert, was sie bei der Herstellung und Anwendung besonders wirtschaftlich macht

### Beispiele und Vergleichsversuche

### Herstellbeispiel 1

### Die Herstellung der Lösung eines thermisch härtbaren Methacrylatcopolymerisats 1

In einem geeigneten Reaktor, ausgestattet mit einem Rührer, zwei Tropftrichtern für die Monomermischung und die Initiatorlösung, Stickstoffeinleitungsrohr, Thermometer und Rückflusskühler, wurden 813 Gewichtsteile einer Fraktion aromatischer Kohlenwasserstoffe mit einem Siedebereich von 158 - 172°C eingewogen. Das Lösemittel wurde auf 140 °C aufgeheizt. Nach Erreichen von 140 °C wurden eine Monomermischung aus 483 Gewichtsteilen n-Butytmethacrylat, 663 Gewichtsteilen Styrol, 337 Gewichtsteilen Hydroxyethylmethacrylat und 31 Gewichtsteilen Methacrylsäure innerhalb von 4 Stunden, und eine Initiatorlösung von 122 Gewichtsteilen t-Butylperethylhexanoat in 46 Gewichtsteilen des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende Polymerlösung hatte einen Feststoffgehalt von 65%, bestimmt in einem Umluftofen (1 h bei 130 °C).

Die Lösung des Methacrylatcopolymerisats 1 wurde als organisches Medium zur Herstellung des erfindungsgemäßen Rheologiehilfsmittels des Beispiels 2 verwendet.

### Herstellbeispiel 2

### Die Herstellung der Lösung eines thermisch härtbaren Methacrylatcopolymerisats 2

In einem geeigneten Reaktor, ausgestattet mit einem Rührer, zwei Tropftrichtern für die Monomermischung resp. Initiatorlösung, Stickstoffeinleitungsrohr, Thermometer und Äückflusskühler, wurden 897 Gewichtsteile einer Fraktion aromatischer Kohlenwasserstoffe mit einem Siedebereich von 158 - 172°C eingewogen. Das Lösemittel wurde auf 140 °C aufgeheizt. Nach Erreichen von 140 °C wurden eine Monomermischung aus 487 Gewichtsteilen (entsprechend 34 Gew.-%, bezogen auf die Monomermischung) t-Butylacrylat, 215 Gewichtsteile (entsprechend 15 Gew.-%, bezogen auf die Monomermischung) n-Butylmethacrylat, 143 Gewichtsteile (10 Gew.-%, bezogen auf die Monoimermischung) Styrol, 572 Gewichtsteile (40 Gew.-%, bezogen auf die Monomermischung) Hydroxypropylmethacrylat und 14 Gewichtsteile (1 Gew.-%, bezogen auf die Monomermischung) Acrylsäure innerhalb von 4 Stunden, und eine Initiatorlösung von 86 Gewichtsteilen t-Butylperethylhexanoat in 86 Gewichtsteilen des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende mit einer Mischung aus 1-Methoxypropylacetat-2, Butylglykolacetat und Butylacetat verdünnte Polymerlösung hatte einen Feststoffgehalt von 54%, bestimmt in einem Umluftofen (1 h bei 130 °C), eine Hydroxylzahl von 155 mg KOH/g Festkörper, eine Säurezahl von 10 mg KOH/g Festkörper und eine Viskosität von 23 dPas (gemessen an einer 60%igen Anlösung der Polymerlösung in dem beschriebenen aromatischen Lösemittel, unter Verwendung eines ICI Platte-Kegel Viskosimeters bei 23 °C). Das Methacrylatcopolymerisat 2 wies eine Glasübergangstemperatur Tg von 67 °C auf.

Das Methacrylatcopolymerisat 2 wurde als Bindemittel verwendet.

### Herstellbeispiel 3

### Die Herstellung der Lösung eines thermisch härtbaren Methacrylatcopolymerisats 3

Herstellbeispiel 2 wurde wiederholt, nur daß anstelle der dort eingesetzten Monomermischung eine Monomermischung aus, bezogen auf die Monomermischung
- 23 Gew.-% 2-Ethylhexylmethacrylat,
- 11,1 Gew.-% 2-Ethylhexylacrylat,
- 19,25 Gew.-% n-Butylmethacrylat,
- 46,1 Gew.-% Hydroxypropylmethacrylat und
- 0,25 Gew.-% Acrylsäure
verwendet wurde. Die Polymerlösung hatte einen Feststoffgehalt von 65%, bestimmt in einem Umluftofen (1 h bei 130 °C), eine Hydroxylzahl von 179 mg KOH/g Festkörper, eine Säurezahl von 10 mg KOH/g Festkörper und eine Viskosität von 7 dPas (gemessen an einer 60%igen Anlösung der Polymerlösung in dem beschriebenen aromatischen Lösemittel, unter Verwendung eines ICI Platte-Kegel Viskosimeters bei 23 °C).

Das Methacrylatcopolymerisat 3 wurde als Bindemittel verwendet.

### Herstellbeispiel 4

### Die Herstellung eines Vernetzungsmittels auf Polyisocyanatbasis

Das Vernetzungsmittel wurde durch Vermischen von
- 54,8 Gewichtsteilen einer 90 %igen Anlösung des Trimeren vom Isocyanurattyp des Hexamethylendiisocyanats in Solventnaphtha/Butylacetat 1 : 1 (Desmodur ® N 3390 der Firma Bayer AG),
- 35,2 Gewichtsteilen des Trimeren vom Isocyanurattyp des Isophorondiisocyanats (Desmodur ® Z4470, 70 %ig, der Firma Bayer AG) und
- 10 Gewichtsteilen Butylacetat
hergestellt.

### Beispiel 1 und Vergleichsversuch V1

### Die Herstellung des erfindungsgemäßen Rheologiehilfsmittels 1 und des nicht erfindungsgemäßen Rheologiehilfsmittels V1

### Beispiel 1:

In einer innenlackierten Dose geeigneter Größe wurden 24 Gewichtsteile 2,6-Dimethylcyclohexylamin und 480 Gewichtsteile Butylacetat vorgemischt und mit einem Dissolver homogenisiert. Zur dieser Vorlage wurden unter Dissolvem eine Lösung von 15,8 Gewichtsteilen Hexamethylendiisocyanat und 102 Gewichtsteilen Butylacetat während zwei Minuten zudosiert. Die resultierende Reaktionsmischung wurde während zehn Minuten mit einem Dissolver dispergiert.

### Vergleichsversuch V1:

Beispiel 1 wurde wiederholt, nur daß 2,6-Dimethylcyclohexylamin gegen eine äquivalente Menge an Benzylamin ausgetauscht wurde.

In der Tabelle 1 wird das strukturviskose Verhalten des Rheologiehilfsmittels 1 mit dem des Rheologiehilfsmittels V1 verglichen. Der Vergleich zeigt, daß das erfindungsgemäße Rheologiehilfsmittel 1 ein ausgeprägteres strukturviskoses Verhalten hat als das nicht erfindungsgemäße Rheologiehilfsmittel V1.

**Tabelle 1: Das strukturviskose Verhalten der Rheologiehilfsmittel 1 und V1**

| **Beispiel und** | **Viskosität (mPas) bei:** | | | |
|---|---|---|---|---|
| **Vergleichsversuch** | **Schergefälle (1/s):** | | | |
| | **1** | **10** | **100** | **1.000** |
| 1 | 4.010 | 1.560 | 254,5 | 28,7 |
| V1 | 3.500 | 1.090 | 388 | 66,7 |

### Beispiel 2

### Die Herstellung des erfindungsgemäßen Rheologiehilfsmittels 2

In einem Becherglas geeigneter Größe wurden 480 Gewichtsteile der Lösung des Methacrylatcopolymerisats 1 des Herstellbeispiels 1 und 11,6 Gewichtsteile 2,6-Dimethylcyclohexylamin vorgelegt vorgelegt Zur Vorlage wurden unter starkem Rühren mit einem Labordissolver 7,6 Gewichtsteile . Hexamethylendiisocyanat innerhalb von 5 Minuten zudosiert. Die Reaktionsmischung wurde noch während 15 Minuten intensiv gerührt. Das resultierende Rheologiehilfsmittel 2 hatte einen Feststoffgehalt von 66 Gew.-%, bestimmt in einem Umluftofen (1 h bei 130 °C).

Das erfindungsgemäße Rheologiehilfsmittel 2 wies ein hervorragendes strukturviskoses Verhalten auf.

### Beispiel 3 und Vergleichsversuch V2

**Die Herstellung eines erfindungsgemäßen und einer erfindungsgemäßen Klarlackierung (Beispiel 3) sowie eines nicht erfindungsgemäßen Zweikomponentenklarlacks und einer nicht erfindungsgemäßen Klarlackierung (Vergleichsversuche V2)**

Der erfindungsgemäße (Beispiel 3) und der nicht erfindungsgemäße (Vergleichsversuch V2) Zweikomponentenklarlack wurden durch Vermischen und Homogenisieren der in der Tabelle 2 aufgeführten Bestandteile hergestellt. Bei dem Vergleichsversuch V2 wurde ein handelsübliches Rheologiehilfsmittel, enthaltend ein Harnstoffderivat auf der Basis von Benzylamin, verwendet.

**Tabelle 2: Stoffliche Zusammensetzung der Zweikomponentenklarlacke des Beispiels 3 und des Vergleichsversuchs V2 und ihre Eigenschaften**

| **Bestandteil** | **Beispiel Vergleichsversuch** | |
|---|---|---|
| | **3** | **V2** |
| Bindemittelkomponente: | | |
| Methacrylatcopolymerisat 3 des Herstellbeispiels 3 | 50 | 50 |
| Setalux ® 81753 der Firma Akzo (handelsübliches Rheologiehilfsmittel | - | 16 |
| erfindungsgemäßes Rheologiehilfsmittel 2 des Beispiels 2 | 16 | - |
| Methacrylatcpolymerisat 2 des Herstellbeispiels 2 | 10 | 10 |
| GB Ester (Glykolsäurebutylester) | 5 | 5 |
| Tinuvin ® 400 (handelsüblicher UV-Absorber) | 1,2 | 1,2 |
| Butylglykolacetat | 5,9 | 5,9 |
| Tinuvin ® 292 (handelsüblicherreversibler Radikalfänger) | 1 | 1 |
| Butanol | 1,6 | 1,6 |
| Byk ® ES 80 (handelsübliches NetzMittel) | 0,2 | 0,2 |
| Xylol | 1,6 | 1,6 |
| Dibasicester (handelsübliches Gemisch der Dimethylester der Glutar-, Adipin- und Sebacinsäure) | 2 | 2 |
| Byk ® 325 (handelsübliches Verlaufmittel) | 0,2 | 0,2 |
| Butylglykolacetat | 5,3 | 5,3 |

| Vernetzungsmittelkomponente: | | |
|---|---|---|
| Vemetzungsmittel gemäß | | |
| Herstellbeispiel 4 | 50 | 50 |
| Zugabe von Butylacetat zur Einsteillung der Spritzviskosität von 25 bis 27 s im DIN-4-Auslaufbecher bei 23°C (in Gew.-%) | 4,5 | 4,2 |

| Eigenschaften: | | |
|---|---|---|
| Originalviskosität im DIN-4-Auslauf-Becher bei 23°C | 38 | 34 |
| Festkörpergehalt bei Spritzviskosität (1 Stunde / 125°C) | 46,3 | 47,1 |
| Lufteinschlüsse nach Einstellung der Spritzviskosität | keine | keine |
| Strukturviskoses Verhalten bei | | |
| Schergefälle 10 1/s | 200 | 116 |
| Schergefälle 1.000 1/s | 88 | 84 |

Der erfindungsgemäße Zweikomponentenklarlack des Beispiels 3 wies eine ausgeprägtere Strukturviskosität auf als der Zweikomponentenklarlack des Vergleichsversuchs V1.

Zur Beurteilung des Ablaufverhaltens (Anzahl und Länge der Läufer) und der Brillanz wurden die Zweikomponentenklarlacke des Beispiels 3 und des Vergleichsversuchs V2 als Keilschichten auf übliche und bekannte, vertikale Lochtafeln mit diagonaler Lochreihe appliziert und während 30 Minuten bei 140 °C in vertikaler Stellung eingebrannt. Das Ablaufverhalten und die Brillanz wurden visuell beurteilt.

Die erfindungsgemäße Klarlackierung (Beispiel 3) übertraf im Ablaufverhalten und in der Brillanz die nicht erfindungsgemäße Klarlackierung des Vergleichsversuchs V2.

## Patentansprüche

1. Rheologiehilfsmittel, enthaltend mindestens ein Harnstoffderivat, herstellbar, indem man
(A) mindestens ein Polyisocyanat mit
(B) mindestens einem Reaktionspartner, ausgewählt aus der Gruppe, bestehend aus sterisch gehinderten, primären und sekundären Monoaminen der allgemeinen Formel (BII) 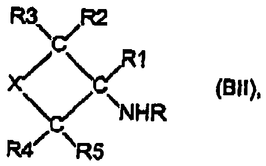 worin die Variablen die folgende Bedeutung haben:
R Wasserstoffatom, Alkyl mit 1 bis 10 Kohlenstoffatomen, Cycloalkyl mit 4 bis 8 Kohlenstoffatomen, Aryl mit 6 bis 12 Kohlenstoffatomen, Heteroaryl mit zwei bis 12 Kohlenstoffatomen;
R1, R3 und R4 unabhängig voneinander wie R oder inerter Substituent;
R2 und R5 unabhängig voneinander wie R, ausgenommen Wasserstoffatom, es sei denn einer der Reste R2 oder R5 steht für einen Rest R mit mindestens zwei Kohlenstoffatomen;
X Methylen-, Dimethylen- oder Trimethylenrest,
umsetzt.

2. Rheologiehilfsmittel nach Anspruch 1, **dadurch gekennzeichnet, dass** die Polylsocyanate (A) Diisocyanate sind.

3. Rheologiehilfsmittel nach Anspruch 1 oder 2, **dadurch gekennzeichnet, dass** R für ein Wasserstoffatom steht.

4. Rheologiehilfsmittel nach einem der Ansprüche 1 bis 3, **dadurch gekennzeichnet, dass** R2 und R5 für Alkylreste stehen.

5. Rheologiehilfsmittel nach einem der Ansprüche 1 bis 4, **dadurch gekennzeichnet, dass** R3 und R4 für Wasserstoffatome stehen.

6. Rheologiehilfsmittel nach einem der Ansprüche 1 bis 5, **dadurch gekennzeichnet, dass** das Monoamin (B) 2,6-Dimethylcyclohexylamin ist.

7. Rheologiehilfsmittel nach einem der Ansprüche 1 bis 6, **dadurch gekennzeichnet, dass** die Harnstoffderivate in der Gegenwart mindestens einer weiteren Verbindung, ausgewählt aus der Gruppe, bestehend aus
(i) physikalisch, thermisch mit aktinischer Strahlung und thermisch und mit aktinischer Strahlung (Dual-Cure) härtbaren, niedermolekularen, oligomeren und polymeren Verbindungen sowie
(ii) grenzflächenaktiven Stoffen aus der Gruppe, bestehend aus ionischen und nichtionischen niedermolekularen Tensiden und ionischen und nlchtionlschen oligomeren und hochmolekularen Tensiden,
herstellbar sind.

8. Rheologiehilfsmittel nach Anspruch 7, **dadurch gekennzeichnet, dass**
- die niedermolekularen Verbindungen aus der Gruppe, bestehend aus thermisch und mit aktinischer Strahlung härtbaren Reaktivverdünnern und thermisch oder thermisch und mit aktinischer Strahlung härtbaren Vernetzungsmitteln,
- die oligomeren und polymeren Verbindungen aus der Gruppe, bestehend aus statistisch, alternierend und blockartig aufgebauten, linearen, verzweigten und kammartig aufgebauten, physikalisch, thermisch, mit aktinischer Strahlung und thermisch und mit aktinischer Strahlung (Dual-Cure) härtbaren (Co)Polymerisaten von olefinisch ungesättigten Monomeren, sowie Polyadditionsharzen und Polykondensationsharzen und
- die Tenside aus der Gruppe der Netzmittel
ausgewählt werden.

9. Rheologlehilfsmittel nach einem der Ansprüche 1 bis 8, **dadurch gekennzeichnet, dass** es mindestens eine Kieselsäure enthält.

10. Verfahren zur Herstellung von Rheologiehilfsmitteln gemäß einem der Ansprüche 1 bis 9, **dadurch gekennzeichnet, dass** man
(A) mindestens ein Polylsocyanat mit
(B) mindestens einem Reaktionspartner, ausgewählt aus der Gruppe, bestehend aus sterlsch gehinderten primären und sekundären Monoaminen der allgemeinen Formel (BII) 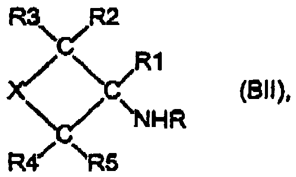 worin die Variablen die folgende Bedeutung haben:
R Wasserstoffatom, Alkyl mit 1 bis 10 Kohlenstoffatomen, Cycloalkyl mit 4 bis 8 Kohlenstoffatomen, Aryl mit 6 bis 12 Kohlenstoffatomen, Heteroaryl mit zwei bis 12 Kohlenstoffatomen;
R1, R3 und R4 unabhängig vonelnander wie R oder inerter Substituent;
R2 und R5 unabhängig voneinander wie R, ausgenommen Wasserstoffatom, es sei denn einer der Reste R2 oder R5 steht für einen Rest R mit mindestens zwei Kohlenstoffatomen;
X Methylen-, Dimethylen- oder Trimethylenrest,
in einem organischen Medium umsetzt.

11. Verfahren nach Anspruch 10, **dadurch gekennzeichnet, dass** die Umsetzung von (A) mit (B) in der Gegenwart mindestens einer weiteren Verbindung, ausgewählt aus der Gruppe, bestehend aus
(i) physikalisch, thermisch mit aktinischer Strahlung und thermisch und mit aktinischer Strahlung (Dual-Cure) härtbaren, niedermolekularen, oligomeren und polymeren Verbindungen sowie
(ii) grenzflächenaktiven Stoffen aus der Gruppe, bestehend aus ionischen und nichtionischen niedermolekularen Tensiden und ionischen und nichtionischen oligomeren und hochmolekularen Tensiden,
durchgeführt wird.

12. Verfahren nach Anspruch 11, **dadurch gekennzeichnet, dass**
- die niedermolekularen Verbindungen aus der Gruppe, bestehend aus thermisch und mit aktinischer Strahlung härtbaren Reaktivverdünnern und thermisch oder thermisch und mit aktinischer Strahlung härtbaren Vernetzungsmitteln,
- die oligomeren und polymeren Verbindungen aus der Gruppe, bestehend aus statistisch, alternierend und blockertig aufgebauten, linearen, verzweigten und kammartig aufgebauten, physikalisch, thermisch, mit aktinischer Strahlung und thermisch und mit aktinischer Strahlung (Dual-Cure) härtbaren (Co)Polymerisaten von olefinisch ungesättigten Monomeren, sowie Polyadditionsharzen und Polykondensationsharzen und
- die Tenside aus der Gruppe der Netzmittel
ausgewählt werden.

13. Verwendung der Rheologiehilfsmittel gemäß einem der Ansprüche 1 bis 9 zur Herstellung von Beschichtungsstoffen, Klebstoffen und Dichtungsmassen.

14. Verwendung nach Anspruch 13, **dadurch gekennzeichnet, dass** die Beschichtungsstoffe, Klebstoffe und Dichtungsmassen physikalisch, thermisch, mit aktinischer Strahlung und thermisch und mit aktinischer Strahlung (Dual-Cure) härtbar sind.

15. Verwendung nach Anspruch 13 oder 14, **dadurch gekennzeichnet, dass** die Beschichtungsstoffe als Klarlacke und/oder als farb- und/oder effektgebende Beschichtungsstoffe für die Herstellung von Klarlacklerungen sowie ein- und mehrschichtiger, farb- und/oder effektgebender, elektrisch leitfählger, magnetisch abschirmender und/oder fluoreszierender Beschichtungen verwendet werden.

16. Verwendung nach einem der Ansprüche 13 bis 15, **dadurch gekennzeichnet, dass** die Beschichtungsstoffe, Klebstoffe oder Dichtungsmassen für das Lackieren, Verkleben und Abdichten von Kraftfahrzeugkarosserien und Teilen hiervon, Kraftfahrzeugen Im Innen- und Außenbereich, Bauwerken im Innen - und Außenbereich, Türen, Fenstern und Möbeln sowie für das Lackieren, Verkleben und Abdichten im Rahmen der industriellen Lackierung von Kleinteilen, Coils, Container, Emballagen, elektrotechnischen Bauteilen und weißer Ware verwendet werden.

## Claims

1. Rheological aid comprising at least one urea derivative preparable by reacting
(A) at least one polyisocyanate with
(B) at least one coreactant selected from the group consisting of sterically hindered primary and secondary monoamines of the monoamines of the general formula (BII) 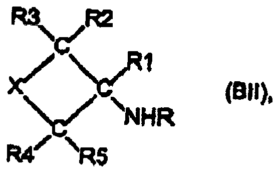 in which the variables have the following meanings:
R hydrogen atom, alkyl of 1 to 10 carbon atoms, cycloalkyl of 4 to 8 carbon atoms, aryl of 6 to 12 carbon atoms, heteroaryl of 2 to 12 carbon atoms;
R1, R3 and R4 independently of one another like R or inert substituent
R2 and R5 independently of one another like R, except for hydrogen atom, unless R2 or R5 stands for a radical R having at least two carbon atoms;
X methylene, dimethylene or trimethylene radical

2. Rheological aid according to Claim 1, **characterized in that** the polyisocyanates (A) are diisocyanates.

3. Rheological aid according to Claim 1 or 2, **characterized in that** R is a hydrogen atom.

4. Rheological aid according to any of Claims 1 to 3, **characterized in that** R2 and R5 are alkyl radicals.

5. Rheological aid according to any of Claims 1 to 4, **characterized in that** R3 and R4 are hydrogen atoms.

6. Rheological aid according to any of Claims 1 to 5, **characterized in that** the monoamine (B) is 2,6-dimethylcyclohexylamine.

7. Rheological aid according to any of Claims 1 to 6, **characterized in that** the urea derivatives are preparable in the presence of at least one further compound selected from the group consisting of
(i) low molecular mass, oligomeric and polymeric compounds curable physically, thermally, with actinic radiation, and thermally and with actinic radiation (dual cure), and
(ii) surface-active substances from the group consisting of ionic and nonionic low molecular mass surfactants and ionic and nonionic oligomeric and high molecular mass surfactants.

8. Rheological aid according to Claim 7, **characterized in that**
- the low molecular mass compounds are selected from the group consisting of reactive diluents curable thermally and with actinic radiation and crosslinking agents curable thermally, or thermally and with actinic radiation,
- the oligomeric and polymeric compounds are selected from the group consisting of random, alternating and block, linear, branched and comb addition (co)polymers of olefinically unsaturated monomers, and also polyaddition resins and polycondensation resins, which are curable physically, thermally, with actinic radiation, and thermally and with actinic radiation (dual cure), and
- the surfactants are selected from the group of the wetting agents.

9. Rheological aid according to any of Claims 1 to 8, **characterized in that** it comprises at least one silica.

10. Process for preparing rheological aids according to any of Claims 1 to 9, **characterized in that**
(A) at least one polyisocyanate is reacted with
(B) at least one coreactant selected from the group consisting of sterically hindered primary and secondary monoamines of the general formula (BII) 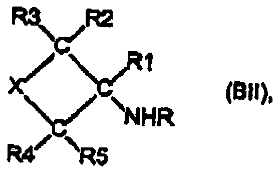 in which the variables have the following meanings:
R hydrogen atom, alkyl of 1 to 10 carbon atoms, cycloalkyl of 4 to 8 carbon atoms, aryl of 6 to 12 carbon atoms, heteroaryl of 2 to 12 carbon atoms;
R1, R3 and R4 independently of one another like R or inert substituent
R2 and R5 independently of one another like R, except for hydrogen atom, unless R2 or R5 stands for a radical R having at least two carbon atoms;
X methylene, dimethylene or trimethylene radical,
in an organic medium.

11. Process according to Claim 10, **characterized in that** the reaction of (A) with (B) is conducted in the presence of at least one further compound selected from the group consisting of
(i) low molecular mass, oligomeric and polymeric compounds curable physically, thermally, with actinic radiation, and thermally and with actinic radiation (dual cure), and
(ii) surface-active substances from the group consisting of ionic and nonionic low molecular mass surfactants and ionic and nonionic oligomeric and high molecular mass surfactants.

12. Process according to Claim 11, **characterized in that**
- the low molecular mass compounds are selected from the group consisting of reactive diluents curable thermally and with actinic radiation and crosslinking agents curable thermally, or thermally and with actinic radiation,
- the oligomeric and polymeric compounds are selected from the group consisting of random, alternating and block, linear, branched and comb addition (co)polymers of olefinically unsaturated monomers, and also polyaddition resins and polycondensation resins, which are curable physically, thermally, with actinic radiation, and thermally and with actinic radiation (dual cure), and
- the surfactants are selected from the group of the wetting agents.

13. Use of the rheological aids according to any of Claims 1 to 9 for preparing coating materials, adhesives, and sealing compounds.

14. Use according to Claim 13, **characterized in that** the coating materials, adhesives, and sealing compounds are curable physically, thermally, with actinic radiation, and thermally and with actinic radiation (dual cure).

15. Use according to Claim 13 or 14, **characterized in that** the coating materials are used as clearcoat materials and/or as color and/or effect coating materials for the production of clearcoat systems and also single-coat or multicoat, color and/or effect, electrically conductive, magnetically shielding and/or fluorescent coatings.

16. Use according to any of Claims 13 to 15, **characterized in that** the coating materials, adhesives or sealing compounds are used for coating, bonding, and sealing motor vehicle bodies and parts thereof, motor vehicles inside and out, buildings inside and out, doors, windows, and furniture, and also for coating, bonding, and sealing as part of the industrial coating of small parts, coils, containers, packaging, electrical components, and white goods.

## Revendications

1. Adjuvant de rhéologie, contenant au moins un dérivé d'urée, pouvant être préparé en ce qu'on transforme
(A) au moins un polyisocyanate avec
(B) au moins un partenaire de réaction choisi dans le groupe constitué par les monoamines primaires et secondaires, stériquement encombrées de formule générale (BII) 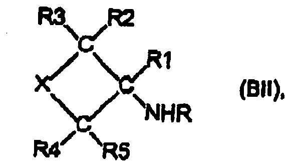 dans laquelle les variables ont la signification suivante :
R un atome d'hydrogène, alkyle comprenant 1 à 10 atomes de carbone, cycloalkyle comprenant 4 à 8 atomes de carbone, aryle comprenant 6 à 12 atomes de carbone, hétéroaryle comprenant deux à 12 atomes de carbone ;
R1, R3 et R4 indépendamment l'un de l'autre, comme R ou un substituant inerte
R2 et R5 indépendamment l'un de l'autre, comme R, à l'exception de l'atome d'hydrogène, sauf si un des radicaux R2 ou R5 représente un radical R comprenant au moins deux atomes de carbone ;
X un radical méthylène, diméthylène ou triméthylène.

2. Adjuvant de rhéologie selon la revendication 1, **caractérisé en ce que** les polyisocyanates (A) sont des diisocyanates.

3. Adjuvant de rhéologique selon la revendication 1 ou 2, **caractérisé en ce que** R représente un atome d'hydrogène.

4. Adjuvant de rhéologie selon l'une quelconque des revendications 1 à 3, **caractérisé en ce que** R2 et R5 représentent des radicaux alkyle.

5. Adjuvant de rhéologie selon l'une quelconque des revendications 1 à 4, **caractérisé en ce que** R3 et R4 représentent des atomes d'hydrogène.

6. Adjuvant de rhéologie selon l'une quelconque des revendications 1 à 5, **caractérisé en ce que** la monoamine (B) est la 2,6-diméthylcyclohexylamine.

7. Adjuvant de rhéologie selon l'une quelconque des revendications 1 à 6, **caractérisé en ce que** les dérivés d'urée peuvent être préparés en présence d'au moins un autre composé, choisi dans le groupe constitué par
(i) les composés de bas poids moléculaire, oligomères et polymères durcissables par voie physique, thermique, par un rayonnement actinique et par voie thermique et par un rayonnement actinique (Dual-Cure), ainsi que
(ii) les substances tensioactives du groupe constitué par les agents tensioactifs de bas poids moléculaire, ioniques et non ioniques et les agents tensioactifs oligomères et de haut poids moléculaire ioniques et non ioniques.

8. Adjuvant de rhéologie selon la revendication 7, **caractérisé en ce que**
- les composés de bas poids moléculaire sont choisis dans le groupe constitué par les diluants réactifs durcissables par voie thermique et par un rayonnement actinique et les réticulants durcissables par voie thermique ou par voie thermique et par un rayonnement actinique,
- les composés oligomères et polymères sont choisis dans le groupe constitué par les (co)polymères statistiques, séquencés et à blocs, linéaires, ramifiés et en peigne, durcissables par voie physique, thermique, par un rayonnement actinique et par voie thermique et par un rayonnement actinique (Dual-Cure) de monomères oléfiniquement insaturés, ainsi que les résines de polyaddition et les résines de polycondensation et
- les agents tensioactifs sont choisis dans le groupe des agents mouillants.

9. Adjuvant de rhéologie selon l'une quelconque des revendications 1 à 8, **caractérisé en ce qu'**il contient au moins une silice.

10. Procédé pour la préparation d'adjuvants de rhéologie selon l'une quelconque des revendications 1 à 9, **caractérisé en ce qu'**on transforme
(A) au moins un polyisocyanate avec
(B) au moins un partenaire de réaction choisi dans le groupe constitué par les monoamines primaires et secondaires, stériquement encombrées de formule générale (BII) 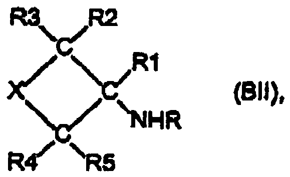 dans laquelle les variables ont la signification suivante :
R un atome d'hydrogène, alkyle comprenant 1 à 10 atomes de carbone, cycloalkyle comprenant 4 à 8 atomes de carbone, aryle comprenant 6 à 12 atomes de carbone, hétéroaryle comprenant deux à 12 atomes de carbone ;
R1, R3 et R4 indépendamment l'un de l'autre, comme R ou un substituant inerte
R2 et R5 indépendamment l'un de l'autre, comme R, à l'exception de l'atome d'hydrogène, sauf si un des radicaux R2 ou R5 représente un radical R comprenant au moins deux atomes de carbone ;
X un radical méthylène, diméthylène ou triméthylène dans un milieu organique.

11. Procédé selon la revendication 10, **caractérisé en ce que** la transformation de (A) avec (B) est réalisée en présence d'au moins un autre composé, choisi dans le groupe constitué par
(i) les composés de bas poids moléculaire, oligomères et polymères durcissables par voie physique, par voie thermique, par un rayonnement actinique et thermique et par un rayonnement actinique (Dual-Cure), ainsi que
(ii) les substances tensioactives du groupe constitué par les agents tensioactifs de bas poids moléculaire, ioniques et non ioniques et les agents tensioactifs oligomères et de haut poids moléculaire ioniques et non ioniques.

12. Procédé selon la revendication 11, **caractérisé en ce que**
- les composés de bas poids moléculaire sont choisis dans le groupe constitué par les diluants réactifs durcissables par voie thermique et par un rayonnement actinique et les réticulants durcissables par voie thermique ou par voie thermique et par un rayonnement actinique,
- les composés oligomères et polymères sont choisis dans le groupe constitué par les (co)polymères statistiques, séquencés et à blocs, linéaires, ramifiés et en peigne, durcissables par voie physique, thermique, par un rayonnement actinique et par voie thermique et par un rayonnement actinique (Dual-Cure) de monomères oléfiniquement insaturés, ainsi que les résines de polyaddition et les résines de polycondensation et
- les agents tensioactifs sont choisis dans le groupe des agents mouillants.

13. Utilisation des adjuvants de rhéologie selon l'une quelconque des revendications 1 à 9 pour la préparation de substances de revêtement, d'adhésifs et de masses d'étanchéité.

14. Utilisation selon la revendication 13, **caractérisée en ce que** les substances de revêtement, les adhésifs et les masses d'étanchéité sont durcissables par voie physique, thermique, par un rayonnement actinique ou par voie thermique et par un rayonnement actinique (dual-cure).

15. Utilisation selon la revendication 13 ou 14, **caractérisée en ce que** les substances de revêtement sont utilisées en tant que laques claires et/ou en tant que substances de revêtement conférant une couleur et/ou un effet pour la réalisation de laquages clairs ainsi que de revêtements à une ou plusieurs couches, conférant une couleur ou un effet, électriquement conductibles, à protection magnétique et/ou fluorescents.

16. Utilisation selon l'une quelconque des revendications 13 à 15, **caractérisée en ce que** les substances de revêtement, les adhésifs ou les masses d'étanchéité sont utilisés pour le laquage, le collage et le bouchage de carrosseries de véhicules automobiles et de pièces de celles-ci, de véhicules automobiles à l'intérieur et à l'extérieur, de constructions à l'intérieur et à l'extérieur, de portes, de fenêtres et de meubles ainsi que pour le laquage, le collage et le bouchage dans le cadre du laquage industriel de petites pièces, de bobines, de conteneurs, d'emballages, de pièces électrotechniques et d'appareils ménagers.
